# EUROPEAN PATENT SPECIFICATION

(11) **EP 0 443 793 B1**
(45) Date of publication and mention of the grant of the patent: **11.06.1997**
(21) Application number: 91301256.3
(22) Date of filing: 18.02.1991
(51) Int. Cl.: G02B 17/08, G03B 21/32

(54) **Noninterfering viewing systems for use in catadiotric projection systems**
Störfreies Betrachtungssystem für katadioptrische Projektionssysteme
Système de viseur non dérangé pour les systèmes catadioptriques de projection

(30) Priority: 20.02.1990 US 481548
(43) Date of publication of application: 28.08.1991
(73) Proprietor: Hughes Aircraft Company, Los Angeles, California 90045-0066 (US)
(72) Inventor: Ansley, David A., Long Beach, California 90804-4066 (US); Haseltine, Eric C., Manhattan Beach, California 90266 (US)
(74) Representative: Colgan, Stephen James

(56) References cited:
- EP-A- 0 396 128
- DE-A- 2 702 496
- GB-A- 906 042
- GB-A- 1 574 351
- GB-A- 1 598 040
- US-A- 3 917 399
- US-A- 4 106 855
- US-A- 4 134 644
- US-A- 4 620 770
- US-A- 4 657 512
- US-A- 4 834 515

## Description

### BACKGROUND OF THE INVENTION

### 1. Field of the Invention

This invention relates to non-interfering viewing systems for use in catadioptric projection systems by two or more persons simultaneously viewing displays in such systems.

### 2. Description of Related Art

Catadioptric area-of-interest display projectors and projection systems have utilized substantially the same displays for simultaneous viewing by two or more persons. Systems are also known, as described in GB-A-906 042 and US-A-4 657 512, in which independent, non-interfering, simultaneous area-of-interest displays for two or more persons are provided.

### SUMMARY OF THE INVENTION

The present invention provides a complementary viewing system for a first and a second viewer simultaneously using the system as specified in claim 1 hereinafter.

Preferably, the invention employs non-interfering area-of-interest display viewing means for two or more persons, hereafter sometimes called viewer No. 1 and viewer No. 2, simultaneously looking at two or more different displays, hereafter sometimes called display No. 1 and display No. 2, within a single catadioptric projection system. Such viewing means permit each of two such persons to see only one of two simultaneous displays without interference from the other display.

The viewing means for each person includes means for determining the line of sight for each viewing means, including means for generating a signal representing the viewer's line of sight, and means for delivering a signal to means in a catadioptric area-of-interest projection system for steering a desired display into the field of view of the viewing means. The viewing means also includes means for transmitting desired wavelengths of light from the desired display, and for rejecting unwanted wavelengths of light, particularly those wavelengths of light intended for another viewer.

More generally, the greater the separation between the desired wavelength of light images intended for viewing by a first viewer, and the desired wavelength of light images intended for viewing by a second viewer, the better the suppression of cross-talk between the two sets of images. For example, if viewer No. 1 is intended to see images having a wavelength of 815 nanometers, and viewer No. 2 is intended to see images having a wavelength of 750 nanometers, the suppression of cross-talk can be about 10,000 to 1 (optical density = 4). If the longer wavelength is 840 nanometers, instead of 815 nanometers, and the shorter wavelength is 715 nanometers, then the suppression could be about 100,000 to 1 (optical density = 5). The greater the suppression of cross-talk, the better that the results are. In practice, the gap between the two wavelengths used, where there are two viewers, for example, depends on the capacities of the optical systems used to produce the images. For the viewing means of this invention, the range of wavelengths from which the images for each of the viewers is selected is preferably from about 600 nanometers to about 1,100 nanometers.

In preferred embodiments, the viewing means comprises selective light-transmitting means adapted to be positioned over a viewer's eyes or viewing aids in the path of light from the desired display. Such light-transmitting means transmit substantially all radiance at the desired wavelength, and reflect or absorb all other wavelengths. In some embodiments, for viewer No. 1, a filter such as a Schott RG830 plate, transmits substantially all radiance at 880 nanometers, and rejects or absorbs substantially all radiance at 750 nanometers, over a field of view subtending an angle in the range of about -20° to about +20°.

For viewer No. 2, a filter such as a Sinott holographic optical element (HOE), double holographic optical element or multi-layer thin film filter absorbs or reflects substantially all radiance at 880 nanometers over a field of view subtending an angle in the range of about -20° to about +20°, and transmits all radiance at 750 nanometers. Such filters are of known kinds. The thin film filter can be, for example, a 43-layer stack of alternating Ta₂O₅ and SiO₂ layers, each of one-quarter wave thickness, with the exception of the first three layers and the air interface layer.

### BRIEF DESCRIPTION OF THE DRAWINGS

The invention can better be understood by reference to the drawings, in which:
FIG. 1 is a graph showing the spectral response of a preferred embodiment for a first viewer's light filter;
FIGS. 2a and 2b include two graphs showing, for a second viewer, the angular response using single and double holographic optical elements;
FIG. 3 shows the spectral response for the two viewer's filters and displays the spectral response of generation 3 night vision goggle (NVG) viewing aids; and
FIG. 4 is a schematic diagram showing the simultaneous viewing of two different sets of images by two different viewers in which cross-talk between the two sets is minimized.

### DETAILED DESCRIPTION OF THE INVENTION

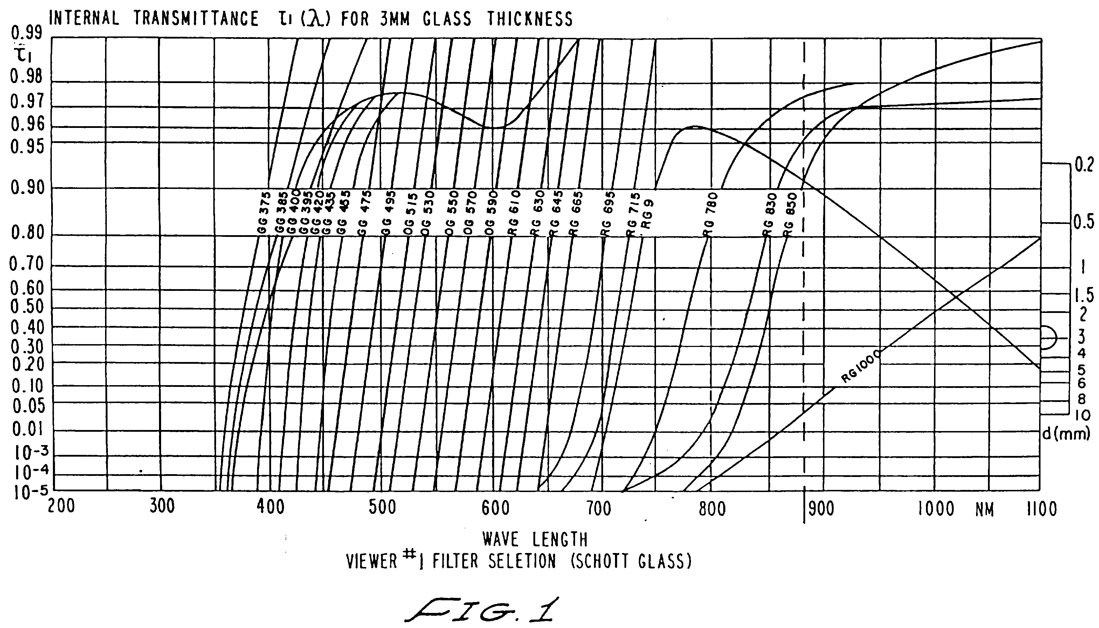

FIG. 1 shows graphically the performance of several different infrared-transmitting filters that transmit substantially all radiance at 880 nanometers wavelength, and rejects or absorbs all radiance at 750 nanometers wavelength, i.e., RG780, RG830 and RG850.

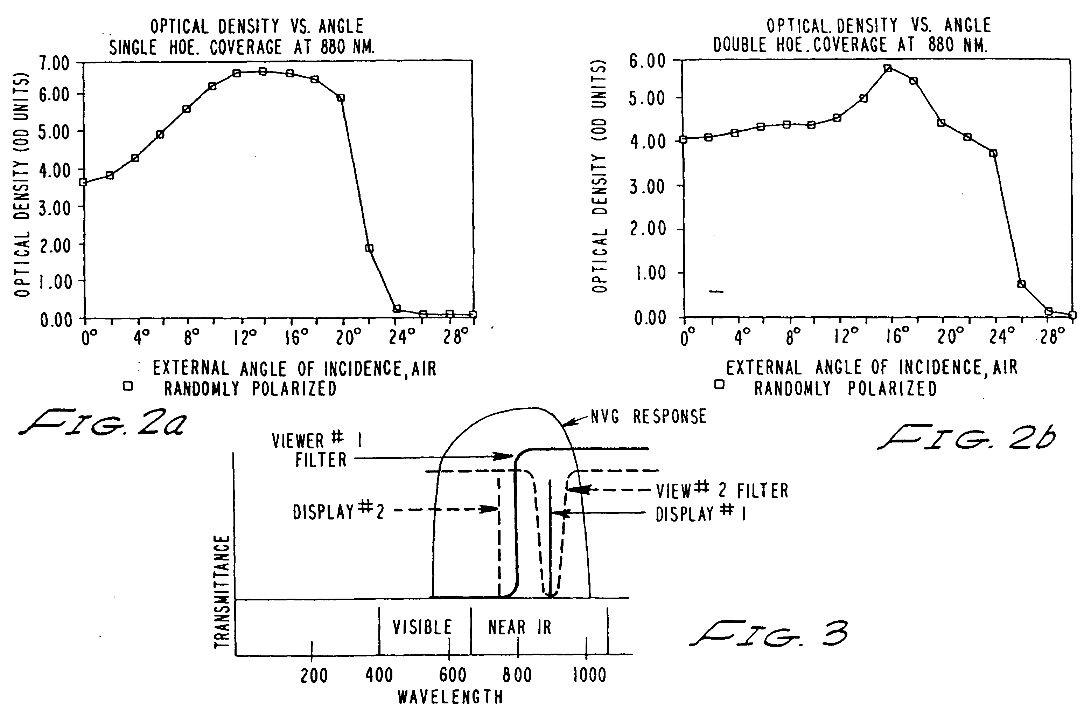

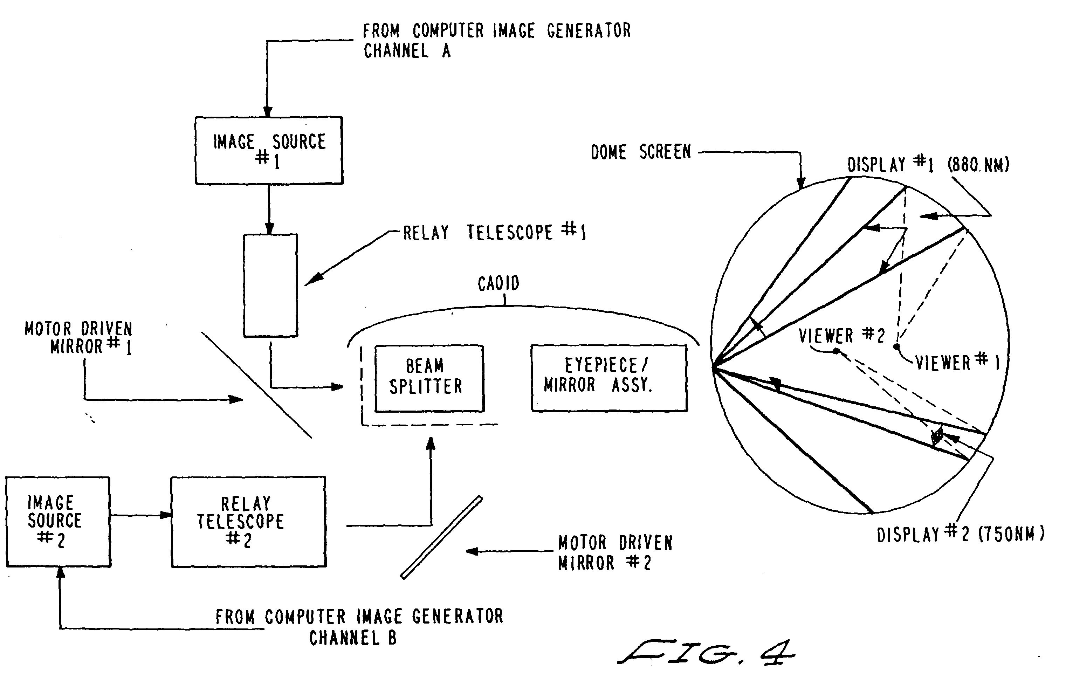

FIGS. 2a and 2b show the estimated optical density versus field of view of single and double holographic optical element (HOE) light filters for a second viewer. As shown in FIG. 3, the second viewer's filters transmit substantially all radiance at 750 nanometers wavelength, and reject or absorb substantially all radiance at 880 nanometers wavelength.

In preferred embodiments, dichromated gelatin-based holographicelements (DCG) are useful for display and filter purposes because of their low scattering properties and their high index modulations. DCG holographic filters as thick as 80 microns and with phase gratings having an index modulation of about 0.06 are particularly useful.

Holographic infrared filter elements are preferably either single-layer or double-layer elements. The single-layer element is simpler because it utilizes only one hologram. The double-layer element uses two complementary gratings, one for each of the two field angle ranges, i.e., high and low. In such devices, the angular bandwidth requirements for each element is reduced.

A single-layer hologram filter designed to cover a field of view of about ±20° with a maximum optical density of 4 at 880 nanometers has the following characteristics: thickness (t) of about 45 microns, grating spacing (L) of about 894.5 nanometers and index modulation of about .053. FIG. 2a shows the optical density plotted against input angle, measured in degrees, in air, at 880 nanometers, for randomly polarized light from a single holographic optical element filter. The curve is symmetric about 0°, and thus describes the extinction properties over the entire 40° field. Theoretical transmission for the same hologram at 750 nanometers, neglecting scattering and absorptive losses, exceeds 95% over the same range.

With double-layer holographic filters, the angular coverage requirement is divided between the two elements. One hologram covers the range from about 0° to about 17°, and the second hologram covers the range from about 15° to about 24°. FIG. 2b represents a composite of the two HOE filter layers. The lump in the curve at incidence angles near 16° is due to overlap in the coverage between the two holograms. As FIG. 2b shows, the associated parameters are less stringent than in the single element case. Thus, the thickness of each hologram can be about 35 microns. The grating spacings are 887 nanometers, and 906 nanometers. The modulation indices are about .045.

With double-layer filter holograms, each hologram can be thinner than a single-layer filter. Each can have lower modulation requirements. Further, angular coverage at the minimum optical density of 3 is about a 48° theoretical field of view, allowing for inherent spatial inhomogeneities. As a result, such filters are more easily produced than single-layer filters, and at lower cost. With the double-layer filters, a contrast ratio of 10,000 to 1 is attainable over the required 40° theoretical field of view.

FIG. 3 shows the use of two different light filters by two different viewers, such that each viewer sees a display intended only for him without seeing a simultaneous display intended for another viewer within the same catadioptric area-of-interest projection system. The spectral response of a generation 3 night viewing goggle (NVG) viewing aid is typically from 600 to 1,100 nanometers. Hence, the wavelengths selected for each of the two viewers should be within this wavelength range.

FIG. 4 shows display No. 1 at 880 nanometers wavelength which can only be seen by the first viewer, and display No. 2 at 750 nanometers wavelength, which can only be seen by the second viewer.

In catadioptric area-of-interest display projection systems, with two viewers, such as the pilot and weapons system officer of a jet fighter simulator, simultaneously present during a night-viewing simulation, each wears viewing means, such as night-vision goggles to amplify the dim light to usable levels. Sensors determine the direction that each viewer's goggles are pointing, and generate one or more signals to direct simultaneously one area-of-interest display into the field of view of one viewer, another display into the field of view of the other. See FIG. 4.

To prevent the pilot and the weapons system officer from seeing the display intended for the other viewer, each viewer's goggles include a filter for each eye to reject incident light that originates with the display intended for the other viewer, and to transmit only the light from the display intended for him.

Independent, non-interfering displays also prevent perspective distortion, which depends on the finite distance from each viewer to the display. For example, assuming the use of a two-position fighter simulator inside a 9-meter (30-foot) diameter dome, one viewer may have perspective distortion error up to 20° if he sees the display intended for the other viewer. The viewing means of the invention permit this problem to be solved by image distortion correction techniques uniquely tailored for each observer.

Image sources for display No. 1 and for display No. 2 may be devices that convert electrical video signals to spatially modulated displays at the desired wavelength. Relay telescopes No. 1 and No. 2 transfer the displays from the sources to the eyepiece/mirror assembly of the catadioptric area-of-interest display projection system (CAOID).

The CAOID projects the displays onto the dome screen. The beamsplitter combines the two displays into a common optical path. The motor-driven mirrors steer the displays to the desired locations on the dome screen. A complete description of these CAOID devices appears in EP-A-0 396 128 entitled "Catadioptric Projector, Catadioptric Projection System and Process" and constituting prior art within the meaning of Article 54(3) EPC.

## Claims

1. A complementary viewing system for a first and a second person simultaneously using said system comprising:
means for directing a first image toward the first person while simultaneously directing a second image toward the second person, said first image being at least partially in the field of view of the second person and comprising radiance at substantially only a first predetermined wavelength, and the second image being at least partially in the field of view of the first person and comprising radiance at substantially only a second predetermined wavelength which is different from said first predetermined wavelength;
first selective light transmitting means positioned in the path of the images directed by said directing means toward said first person for transmitting the first image to the first person and rejecting or absorbing substantially all radiance at substantially all wavelengths other than said first predetermined wavelength; and
second selective light transmitting means positioned in the path of the images directed by said directing means toward said second person for transmitting the second image to the second person and rejecting or absorbing substantially all radiance at substantially all wavelengths other than said second predetermined wavelength, whereby each person can simultaneously view a respective image without interference by the other image, characterized in that said first and said second images are different, and in that
each of said first and second selective light transmitting means include means for determining the line of sight of the first and the second person, respectively, means for generating a signal representing the first and the second person's line of sight, respectively, and means for delivering said signal for steering a desired image display into the field of view of said first and said second person, respectively.

2. A system according to claim 1 wherein the directing means comprises a catadioptric area-of-interest display.

3. A system according to claim 1 or 2 wherein the first transmitting means comprises a filter.

4. A system according to any of claims 1 to 3 wherein the second transmitting means comprises a single holographic optical element, a double holographic optical element, or a filter formed of multiple layers of thin films.

5. A system according to any preceding claim wherein the first and second wavelengths are in the infrared.

6. A system according to any preceding claim wherein the first transmitting means comprises goggles.

7. A system according to any preceding claim wherein the second transmitting means comprises goggles.

## Patentansprüche

1. Komplementärbetrachtungssystem für eine erste und eine zweite Person, die gleichzeitig das System benützen, mit:
einer Vorrichtung zum Lenken eines ersten Bildes auf die erste Person, während gleichzeitig ein zweites Bild auf die zweite Person gelenkt wird, wobei sich das erste Bild zumindest teilweise im Blickfeld der zweiten Person befindet und nur an einer im wesentlichen ersten vorbestimmten Wellenlänge eine spezifische Lichtausstrahlung aufweist, und wobei sich das zweite Bild zumindest teilweise im Blickfeld der ersten Person befindet und nur an einer im wesentlichen zweiten vorbestimmten, sich von der ersten vorbestimmten Wellenlänge unterscheidenden Wellenlänge eine spezifische Lichtausstrahlung aufweist;
einer ersten selektiven Lichtdurchlaßvorrichtung, die in dem Weg der durch die Lenkungsvorrichtung auf die erste Person gelenkten Bilder angeordnet ist, um das erste Bild an die erste Person durchzulassen und um im wesentlichen alle spezifische Lichtausstrahlung bei im wesentlichen allen Wellenlängen, die anders sind als die erste vorbestimmte Wellenlänge, zu sperren oder zu absorbieren;
einer zweiten selektiven Lichtdurchlaßvorrichtung, die in dem Weg der durch die Lenkungsvorrichtung auf die zweite Person gerichteten Bilder angeordnet ist, um im wesentlichen alle spezifische Lichtausstrahlung bei im wesentlichen allen Wellenlängen, die anders sind als die zweite vorbestimmte Wellenlänge, zu sperren oder zu absorbieren, wobei jede Person gleichzeitig ein jeweiliges Bild ohne Störung durch das andere Bild betrachten kann,
dadurch gekennzeichnet,
daß das erste und das zweite Bild unterschiedlich sind, und
daß sowohl die erste als auch die zweite selektive Lichtdurchlaßvorrichtung eine Einrichtung zum Bestimmen der jeweiligen Sichtlinie der ersten und zweiten Person, eine Einrichtung zum Erzeugen eines die jeweilige Sichtlinie der ersten und zweiten Person repräsentierenden Signales und eine Einrichtung zum Übermitteln des Signales, um eine gewünschte Bildanzeige jeweils in das Blickfeld der ersten bzw. der zweiten Person zu lenken, enthält.

2. System gemäß Anspruch 1, in dem die Lenkungsvorrichtung eine katadioptrische Anzeige für das Gebiet von Interesse aufweist.

3. System gemäß Anspruch 1 oder 2, in dem die erste Durchlaßvorrichtung ein Filter aufweist.

4. System nach jedem der vorhergehenden Ansprüche 1 bis 3, in dem die zweite Durchlaßvorrichtung ein einfaches, holografischen, optisches Bauteil, ein zweifaches, holografische, optisches Bauteil oder ein aus Mehrfachschichten von dünnen Filmen gebildetes Filter aufweist.

5. System gemäß den vorherigen Ansprüchen, in dem die erste und zweite Wellenlänge im Infrarotbereich liegen.

6. System gemäß den vorherigen Ansprüchen, in dem die erste Durchlaßvorrichtung Brillen aufweist.

7. System gemäß den vorherigen Ansprüchen, in dem die zweite Durchlaßvorrichtung Brillen aufweist.

## Revendications

1. Système d'observation visuelle complémentaire pour des première et seconde personnes utilisant simultanément ledit système, comportant :
des moyens destinés à diriger une première image vers la première personne tout en dirigeant simultanément une seconde image vers la seconde personne, ladite première image étant au moins partiellement dans le champ d'observation visuelle de la seconde personne et comprenant un rayonnement qui n'est sensiblement que d'une première longueur d'onde prédéterminée, et la seconde image étant au moins partiellement dans le champ d'observation visuelle de la première personne et comprenant un rayonnement qui n'est sensiblement que d'une seconde longueur d'onde prédéterminée différente de ladite première longueur d'onde prédéterminée ;
un premier moyen de transmission sélective de lumière positionné dans le trajet des images dirigées par lesdits moyens de direction vers ladite première personne pour transmettre la première image à la première personne et rejeter ou absorber sensiblement tout le rayonnement sensiblement à toutes les longueurs d'ondes autres que ladite première longueur d'onde prédéterminée ; et
un second moyen de transmission sélective de la lumière positionné dans le trajet des images dirigées par lesdits moyens de direction vers ladite seconde personne pour transmettre la seconde image à la seconde personne et rejeter ou absorber sensiblement tout le rayonnement sensiblement à toutes les longueurs d'ondes autres que ladite seconde longueur d'onde prédéterminée, grâce à quoi chaque personne peut simultanément observer visuellement une image respective sans interférence de l'autre image, caractérisé en ce que lesdites première et seconde images sont différentes, et en ce que chacun desdits premier et second moyens de transmission sélective de lumière comprend un moyen pour déterminer l'axe de vision des première et seconde personnes, respectivement, un moyen pour générer un signal représentant l'axe de vision des première et seconde personnes, respectivement, et un moyen pour délivrer ledit signal afin de diriger un affichage d'image souhaité dans le champ d'observation visuelle desdites première et seconde personnes, respectivement.

2. Système selon la revendication 1, dans lequel les moyens de direction comprennent un dispositif d'affichage catadioptrique d'une zone d'intérêt.

3. Système selon la revendication 1 ou 2, dans lequel le premier moyen de transmission comprend un filtre.

4. Système selon l'une quelconque des revendications 1 à 3, dans lequel le second moyen de transmission comprend un élément optique holographique simple, un élément optique holographique double ou un filtre formé de couches multiples de films minces.

5. Système selon l'une quelconque des revendications précédentes, dans lequel les première et seconde longueurs d'ondes sont dans l'infrarouge.

6. Système selon l'une quelconque des revendications précédentes, dans lequel le premier moyen de transmission comprend des lunettes.

7. Système selon l'une quelconque des revendications précédentes, dans lequel le second moyen de transmission comprend des lunettes.
